# EUROPEAN PATENT APPLICATION

(11) **EP 2 481 788 A1**
(43) Date of publication of application: **01.08.2012**
(21) Application number: 11152819.6
(22) Date of filing: 01.02.2011
(51) Int. Cl.: C10B 47/30, C10B 53/02, C10C 5/00, C10J 3/66, C10L 1/32, F26B 5/04, F01K 23/06

(54) **Method of biomass fuel production from carbonaceous feedstock**

(71) Applicant: Ars Energy OÜ, 12915 Tallinn (EE)
(72) Inventor: Villemson, Arvi, 12015, Tallinn (EE); Villemson, Sven, 12915, Tallinn (EE); Usenkov, Mihhail, 193168, Sankt-Peterburg (RU)
(74) Representative: Sarap, Margus

(57) **Abstract**

The present invention is related to the method of biomass fuel production from carbonaceous feedstock, including drying of materials in drying chamber, pyrolysis of materials in pyrolysis chamber, bio oil separation from pyrolysis gas and vapor, removal of gas and vapor mixture of volatile combustion products, combustion of resin-free gas and vapor in combustion chamber with air supply, unloading of pyrolyzed materials (pyrocarbon) whereas the pyrolysis is performed in pyrolysis chamber which rotates horizontally around its longitudinal axis partially filled up by grinding balls.

## Description

### Technical Field

The invention is related to fuel industry, waste management and ecology, and can be used for carbonaceous feedstock processing, including production and consumption, mainly wood, vegetation, agricultural and other residuals containing organic compounds.

### Background Art

The known method of biomass fuel production from carbonaceous feedstock is described in the Russian Federation Patent No. RU 2083633 C (LISOV VLADIMIR I) 10.07.1997. The method includes preliminary drying of raw material and further heat treatment in the presence of gas coolant in continuous process, consequentially passing through drying zone, pyrolysis zone where pyrolytic carbon (wood charcoal) is generated, and decrepitation zone. The method disadvantage is that the use of gas coolant in pyrolysis zone reduces the concentration of resin products in thermal feedstock degradation steam and gas, rises its temperature and complicates bio oil separation condensation system. Progressive formation of pyrolysis crust on the feedstock surface and absence of catalytic agent in operating area reduces the rate of pressure-thermal-chemical conversion (pyrolysis). The method does not allow production of high-energy industrial fuel of synthesis gas, bio oil and suspension fuel type.

The known method of biomass fuel production from carbonaceous feedstock is described in the Russian Federation Patent No. RU 2166527 C (UGA; OOO RAD) 10.05.2001 . The method includes drying, pyrolysis of materials, pyrocarbon decrepitation (wood charcoal) by feeding hot furnace gas, extraction of generated vapor and gas mixture, pyrocarbon cooling, direction of vapor and gas from zone of active decomposition to combustion chamber, combustion of resin-free vapor and gas in combustion chamber with air supply, unloading of pyrolyzed materials.

The disadvantage of the prescribed method is that the progressive formation of pyrolysis crust on the feedstock surface and absence of catalytic agent in operating area reduces the rate of pressure-thermal-chemical conversion (pyrolysis). The method does not allow production of high-energy industrial fuel of synthesis gas, bio oil and suspension fuel type.

The closest method according to technical essence is "The method of bio oil and wood charcoal production from wood biomass and drying-retort facility for bio oil and wood charcoal production", Russian Federation Patent No. RU 2338770 C (OOO ARS GRUPPA) 20.10.2008 . The know solution is accepted as a prototype. The method includes drying, pyrolysis of carbonaceous materials, separation of bio oil from pyrolysis and pyrocarbon (wood charcoal) vapor and gas in one facility, removal of gas mixture volatile pyrolysis products, combustion of resin-free vapor and gas in combustion chamber with air supply, unloading of pyrolyzed materials (pyrocarbon and wood charcoal). The method disadvantage is that the progressive formation of pyrolysis crust on the feedstock surface and absence of catalytic agent in operating area reduces the rate of pressure-thermal-chemical conversion. The method does not allow production of high-energy industrial fuel of synthesis gas, bio oil and suspension fuel type.

### Summary of invention

Novel features that distinguish the invention are as follows.
1) Increase of feedstock drying rate by moisture extraction in the form of the finest drops (mist) by impulse-vacuum action that reduces power consumption for usually used thermal vapor formation on the feedstock surface.
2) Increase of rate and stability of pressure-thermal-chemical conversion (pyrolysis) reaction by continuous crushing of pyrolysis crust in rotating pyrolysis chamber using grinding balls which besides act as heat-transfer agent.
3) Increase of pressure-thermal-chemical conversion (pyrolysis) rate by thermal catalytic processing of catalytic powder in the form of pellets in rotating drum with perforated ends between which crushed pyrolysis crust powder flows through.

### Brief description of drawings

The present invention will be described in detail in the following description of the embodiments with references to the drawing where

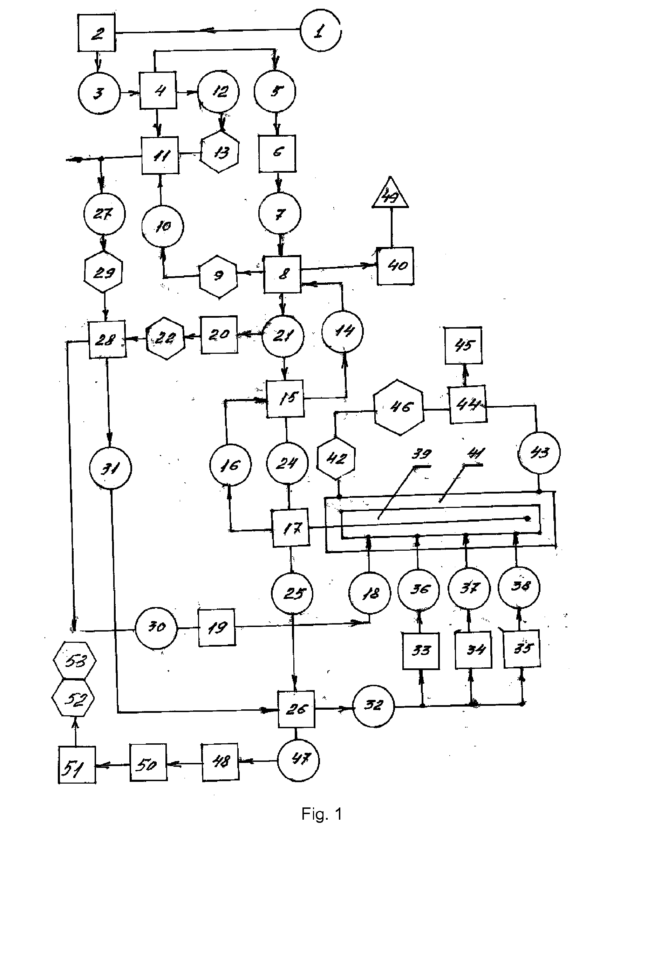

In the fig 1 is provided the block diagram of biomass fuel production from carbonaceous feedstock according to the invention.

### Description of embodiments

The method of biomass fuel production from carbonaceous feedstock is realized as follows (see block diagram in fig.1):

1) Initial feedstock 1 in the form of felling residues, industrial wood residues, vegetation residues, etc. are delivered to the site 2.

2) Drowned biomass 3 is fed to de-watering equipment 4 of suction filter type.

3) Drowned biomass 5 is fed to press-bunker (feeding equipment with lock) 6.

4) When the bunker 6 is filled up biomass batch 7 is fed through the lock to the drying-decrepitation chamber 8.

5) Drying-decrepitation chamber 8 is connected by quick-response pneumatic operation valve 9 with receiver-condensate collector 11. Using vacuum pump negative pressure occurs; quick-response vacuum valve connects the receiver 11 with drying chamber 8 where moisture boils up and in the form of mist is removed to the receiver 11 and condensed. Such process called vacuum-impulse drying results in effective moisture removal from biomass and acceleration of its heating by furnace gases.

6) Moisture 12, obtained from biomass during its dehydration process, is fed to the receiver-condensate collector 11 by the pump 13.

7) Hot gaseous heat-transfer agent 14 is fed to the chamber 8 from pyrolysis chamber 15.

8) Hot gaseous heat-transfer, agent which has passed through decrepitation chamber 17 in the form of combustion products 18, 16 is fed to pyrolysis chamber 15 from combustion chamber 19. Decrepitation chamber 17 is designed in the form of rotating drum with perforated ends, partially filled up with grinding balls which besides act as heat-transfer agent. Pyrolysis chamber 17 is also designed in the form of co-axially rotating drum with perforated walls, partially filled up with solid catalytic agent in the form of pellets.

9) System for pyrolysis gas separation 20 from pyrolyzed biomass 21 is installed between pyrolysis chamber 15 and drying-decrepitation chamber 8.

10) Separated gas and vapor mixture 20 is fed by gas blower 22 (in the form of gas and vapor mixture 23) to the combustion chamber 19 where pyrocarbon 24 is decrepitated by heating through the chamber walls and fed to gas and vapor activation chamber 26.

11) Water and condensate mixture 27 is fed by the pump 29 to the steam generator 28 where it becomes superheated steam 31 by means of heating in the heat exchanger by hot gas and vapor mixture 30 fed by gas blower 22.

12) Superheated steam 31 is fed to the chamber 26. This results in pyrocarbon 25 activation and generation of synthesis gas 32 - carbon monoxide and hydrogen mixture.

13) Synthesis gas 32, which is high-energy fuel, is fed to combustion chambers 33,34,35, where it is liquefied, and combustion products 36,37,38 under 1600-1700 °C are fed to pyrocarbon decrepitation chamber 17 through the collector 39 together with pyrolysis gas and vapor mixture combustion products 18.

14) The combined hot gas heat-transfer agent is fed through pyrolysis chamber 17, drying-decrepitation chamber 8 to smoke stacks 40.

15) The collector 39 is a part of heat-exchanger 41 which is used for pumping of gaseous working medium (helium or air) under 5-10 atm. pressure using compressor 42.

16) During heating in heat-exchanger 41 working medium 43 is fed to gas engine 44 which actuates electric generator 45 and generates alternating current.

17) Spent working medium 43 is fed from the engine 44 to cooling radiator 46 and returned by the compressor 42 to the heat-exchanger 41. Thus, working medium travels around the closed cycle. Fine pyrocarbon residue 47 (if there is any in activation zone) in the mixture with mineral concretion (ash) is removed from the facility through unloading locks 48. After separation 50 separated pyrocarbon can be used as finely dispersed fuel. In case of its mixture with bio oil (from pyrolysis gas and vapor) and activation 51 of this mixture in cavitating activator - in the form of liquid suspension activated biomass fuel 52. Water-pyrocarbon suspension fuel 53 (analogue of cavitation coal-water fuel) is obtained by mixing of pyrocarbon with condensate 27 (from the receiver-condensate collector) after activation in cavitating activator.

18) Thus, the method realized using the above-mentioned system enables generation of high-energy gaseous, liquid, suspension and powder biomass fuel, as well as cogeneration of electric and thermal energy.

Reference list of block diagram on fig 1

1 - Initial carbonaceous feedstock (straw, reed, wood chips, peat, etc.);
2 - Feedstock effective area;
3 - Water cut biomass;
4 - de-watering equipment;
5 - dewatered biomass;
6 - press-bunker (feeding equipment with lock);
7 - batch of dewatered milled feedstock;
8 - feedstock drying-decrepitation chamber;
9 - quick-response pneumatic operated valve;
10 - mixture of drops, vapor and mist;
11 - vacuum-impulse receiver-condensate collector;
12 - feedstock moisture (in the form of drops-mist);
13 - vacuum pump;
14 - hot heat-transfer agent;
15 - pyrolysis chamber;
16 - heat-transfer agent;
17 - pyrocarbon decrepitation chamber;
18 - combustible gas combustion products;
19 - combustion chamber;
20 - pyrolysis gas separation system;
21 - pyrolyzed wood;
22 - gas blower;
23 - vapour-gas mixture;
24 - pyrocarbon (wood charcoal and other);
25 - decrepitated pyrocarbon (wood charcoal and other);
27 - condensate;
33, 34, 35 - gas combustion chamber;
36, 37, 38 - gas combustion products;
39 - gas collector;
40 - smoke stacks;
47 - pyrocarbon (wood charcoal and other);
48 - unloading equipment with lock;
49 - steam and gas release from smoke stacks;
50 - separation;
51 - activation;
52 - suspension biomass fuel

## Claims

1. A method of biomass fuel production from carbonaceous feedstock, including drying of materials in drying chamber, pyrolysis of materials in pyrolysis chamber, bio oil separation from pyrolysis gas and vapor, removal of gas and vapor mixture of volatile combustion products, combustion of resin-free gas and vapor in combustion chamber with air supply, unloading of pyrolyzed materials (pyrocarbon) **characterized by** that the pyrolysis is performed in pyrolysis chamber which rotates horizontally around its longitudinal axis partially filled up by grinding balls - heat-transfer agents, and material drying is performed by heating of materials in drying chamber (mainly by furnace gas) up to 50-95°C, chamber cavity is sealed and connected by means of quick-response pneumatic valve with the receiver-condensate-collector cavity where by this moment there is vacuum; moisture is removed from the material in drying chamber cavity (mainly in the form of drops and mist); the moisture is sucked to the receiver-condensate collector, where it is condensed and fed through steam generator to gas and vapor activation chamber; to gas and vapor activation chamber pyrolyzed hot materials (pyrocarbon) are fed simultaneously, and synthesis gas is generated (carbon monoxide and hydrogen mixture), and solid residue of pyrocarbon and mineral concretion is unloaded, separated and finely dispersed pyrocarbon (powdered biomass fuel) is obtained.

2. The method according to claim 1 characterized that the pyrolysis is performed using solid catalyst in the form of pellets in operating area of thermal-pressure-chemical conversion, which partially (up to 50%) fills up the drum with perforated walls. Both the pyrolysis chamber and drum rotate about the same axis. During rotation pyrocarbon from pyrolysis chamber is fed to activation chamber. This results in additional (catalytic) thermal processing of pyrolysis crust milted by the balls.

3. The method according to claims 1 and 2 characterized that finely dispersed pyrocarbon is mixed with bio oil from pyrolysis gas and vapor; the mixture is activated (mainly in cavitating activator) and liquid suspension activated biomass fuel is obtained.

4. The method according to claims 1 and 2 characterized that finely dispersed pyrocarbon is mixed with condensate, generated in the receiver-condensate collector during material drying process; the mixture is activated (mainly in cavitating activator) and liquid suspension activated biomass fuel is obtained.
